# EUROPÄISCHE PATENTSCHRIFT

(11) **EP 3 011 154 B1**
(45) Veröffentlichungstag und Bekanntmachung des Hinweises auf die Patenterteilung: **14.06.2017**
(21) Anmeldenummer: 14722583.3
(22) Anmeldetag: 22.04.2014
(51) Int. Cl.: F01N 3/20, F02M 53/04, F01N 3/28

(54) **KÜHLKÖRPER FÜR EINSPRITZVENTIL**
COOLING ELEMENT FOR INJECTION VALVE
DISSIPATEUR THERMIQUE POUR INJECTEUR

(30) Priorität: 20.06.2013 DE 102013211684
(43) Veröffentlichungstag der Anmeldung: 27.04.2016
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2014/058112
(87) Internationale Veröffentlichungsnummer: WO 2014/202259

(56) Entgegenhaltungen:
- CH-A- 152 348
- DE-A1-102009 027 181
- DE-A1-102010 051 656
- DE-A1-102011 078 504

## Beschreibung

Die Erfindung betrifft einen Kühlkörper für ein Einspritzventil, insbesondere für ein Einspritzventil, das zum Einspritzen eines flüssigen Reduktionsmittels in einen Abgasstrang eines Verbrennungsmotors vorgesehen ist. Die Erfindung betrifft darüber hinaus auch ein Einspritzventil, das mit solch einem Kühlkörper verbunden ist.

### Stand der Technik

Bei Kraftwagen mit Verbrennungsmotoren, insbesondere Dieselmotoren, muss aufgrund der verschärften Abgasgesetzgebung unter anderem der Schadstoff NOₓ reduziert werden. Eine Methode, die dabei häufig zur Anwendung kommt, ist das sogenannte SCR-Verfahren, bei dem der Schadstoff NOₓ unter zu Hilfenahme eines flüssigen Reduktionsmittels zu N₂ und H₂O reduziert wird.

Dazu wird das flüssige Reduktionsmittel aus einem Tank entnommen, von einer Förderpumpe zu einem an einem Abgasstrang des Verbrennungsmotors angeordneten Einspritzmodul gefördert und von dem Einspritzmodul dosiert in den Abgasstrang eingespritzt, wo es sich mit den durch den Abgasstrang strömenden Abgasen des Verbrennungsmotors vermischt. Da das Einspritzmodul den hohen Temperaturen der durch den Abgasstrang strömenden Abgase ausgesetzt ist, ist meist eine kühlwasserbasierte Kühlung vorgesehen, um die Temperatur des Einspritzmoduls zu begrenzen und so ein Überhitzen des Einspritzmoduls zu vermeiden.

DE 10 2010 051 656 A1 und DE 10 2010 048 284 A1 offenbaren jeweils eine Anordnung zum Kühlen des Einspritzmoduls. Bei den dort gezeigten Anordnungen ist der Kühladapter ein separates Bauteil, das aus zwei Blechteilen zusammengeschweißt ist, die einen Ringkanal bilden, der über zwei Klebeverbindungen mit einem Schaftbereich des Dosierventils verbunden ist.

DE 10 2011 078 504 A1 offenbart ein kühlbares Dosiermodul mit einem sich im Wesentlichen in einer Längsrichtung erstreckenden Injektor; einem in einem Teilbereich der Längserstreckung des Injektors um den Umfang des Injektors angeordneten Ventilgehäuse; und einer Hülse, die in einem Teilbereich der Längserstreckung des Injektors so um den Umfang des Injektors und des Ventilgehäuses angeordnet ist, dass zwischen dem Injektor und der Hülse ein zur Aufnahme eines Kühlmittels geeignetes Kühlvolumen ausgebildet ist. Die Hülse umschließt den Injektor auch in einem Teilbereich seiner Längserstreckung, der nicht von dem Ventilgehäuse umschlossen ist. Das Kühlvolumen wird wenigstens teilweise von dem Injektor begrenzt und zwischen dem Injektor und dem Ventilgehäuse ist wenigstens ein Dichtelement vorgesehen, um das Kühvolumen fluiddicht abzuschließen.

### Offenbarung der Erfindung

Es ist eine Aufgabe der Erfindung, einen verbesserten Kühlkörper für ein Einspritzmodul bereitzustellen, der insbesondere einfach herzustellen ist und der auch bei hohen Temperaturen, wie sie beispielsweise beim Betrieb eines Verbrennungsmotors und bei einer Montage durch Löten oder Schweißen auftreten, das Kühlvolumen zuverlässig und dauerhaft abdichtet.

Ein erfndungsgemäßer Kühlkörper für ein Einspritzventil, das insbesondere zum Einspritzen eines flüssigen Reduktionsmittels in einen Abgasstrang eines Verbrennungsmotors vorgesehen ist, mit den Merkmalen des unabhängigen Anspruchs hat einen hohlen Bereich, der zur Aufnahme eines Abschnitts des Einspritzventils vorgesehen ist, ein um diesen hohlen Bereich umlaufendes Kühlblech sowie eine an einer Stirnseite des hohlen Bereichs angeordneten Stirnplatte. Das Kühlblech und die Stirnplatte sind fluiddicht miteinander verbunden, so dass in einem Zustand, in dem ein einspritzseitiger Abschnitt eines Einspritzventils bestimmungsgemäß in dem hohlen Bereich angeordnet ist, die Stirnplatte, das Kühlblech und das Einspritzventil gemeinsam ein um den einspritzseitigen Abschnitt des Einspritzventils umlaufendes Kühlvolumen begrenzen. Die Stirnplatte weist dabei wenigstens einen napfförmig ausgeformten Bereich auf, der eine Stirnwand und wenigstens eine Seitenwand hat und zur Aufnahme des einspritzseitigen Abschnitts des Einspritzventils ausgebildet ist. Im napfförmig ausgebildeten Bereich der Stirnplatte ist wenigstens eine Einspritzöffnung vorgesehen, die es ermöglicht, Fluid durch die Stirnplatte aus dem Einspritzventil in den Abgasstrang des Verbrennungsmotors einzuspritzen.

Die Erfindung umfasst auch eine Einspritzvorrichtung mit einem Einspritzventil, das insbesondere zum Einspritzen eines fluiden Reduktionsmittels in einen Abgasstrang eines Verbrennungsmotors ausgebildet ist, und einem erfindungsgemäßen Kühlkörper, wie er zuvor beschrieben worden ist. Dabei ist ein einspritzseitiger Abschnitt des Einspritzventils in dem napfförmigen Bereich der Stirnplatte des Kühlkörpers angeordnet, insbesondere so, dass er mit der Stirnseite und wenigstens einer Seitenwand des napfförmigen Bereichs im Kontakt steht.

Durch den in der Stirnplatte ausgebildeten napfförmigen Bereich ist es möglich, z.B. durch (Laser-)Schweißen eine formschlüssige Verbindung zwischen dem Einspritzventil und der Stirnplatte zu schaffen, die auch bei hohen Temperaturen, wie sie insbesondere beim Betrieb eines Verbrennungsmotors an dessen Abgasstrang auftreten, fluiddicht ausgebildet werden kann. Insbesondere kann in diesem Hochtemperaturbereich erfindungsgemäß auf wärmeempfindliche Klebeverbindungen und/oder O-Ringe verzichtet werden. Es wird daher ein Kühlkörper zur Verfügung gestellt, der auch bei hohen Betriebstemperaturen dauerhaft ein gut abgedichtetes Kühlvolumen bereitstellt und der aufgrund weniger Fügestellen einfach und kostengünstig herstellbar ist.

Da insbesondere der vordere, einspritzseitige Abschnitt des Einspritzventils in der Regel zylinderförmig ausgebildet ist, ist auch der zur Aufnahme des vorderen, einspritzseitigen Abschnitts des Einspritzventils vorgesehene napfförmige Bereich in der Regel rotationssymmetrisch um die Längsachse des zylinderförmigen Abschnitts des Einspritzventils mit einer kreisförmigen Stirnseite und einer entlang des Umfangs der kreisförmigen Stirnseite umlaufenden Seitenwand ausgebildet. Die Form des napfförmigen Bereichs kann aber auch an andere mögliche Ventilformen, z.B. Einspritzventile, die einen ellipsenförmigen oder vieleckigen Querschnitt haben, angepasst werden, ohne vom Grundgedanken der Erfindung abzuweichen.

In einer möglichen Ausführungsform sind das Kühlblech und die Stirnplatte durch Schweißen, insbesondere Laserschweißen, fluiddicht miteinander verbunden. Da sowohl das Kühlblech als auch die Stirnplatte aus hitzebeständigem Metall ausgebildet sind, kann durch Schweißen, insbesondere Laserschweißen, kostengünstig eine dauerhaft zuverlässig abdichtende Verbindung zwischen dem Kühlblech und der Stirnplatte hergestellt werden.

In einer Ausführungsform weist der Kühlkörper zusätzlich ein Anschlussstück auf, das zur Aufnahme eines dem einspritzseitigen Abschnitt gegenüberliegenden hinteren Endbereichs des Einspritzventils ausgebildet ist. Ein derartiges Anschlussstück ermöglicht es, das Einspritzventil vollständig im Kühlkörper einzuschließen und auf diese Weise vor schädlichen Umwelteinflüssen zu schützen. Vorzugsweise ist das Anschlussstück so ausgebildet, dass es eine Zulaufleitung enthält, aufnimmt und/oder abstützt, die ausgebildet ist, um dem Einspritzventil das einzuspritzende Fluid zuzuführen.

In einer Ausführungsform ist an dem Kühlblech des Kühlkörpers wenigstens ein Zulaufstutzen und/oder ein Ablaufstutzen vorgesehen, der ausgebildet ist, um ein Kühlfluid in das bzw. aus dem Kühlvolumen zu führen. Auf diese Weise kann ein Kühlfluid zuverlässig in das Kühlvolumen eingeführt und wieder aus diesem abgeführt werden.

In einer Ausführungsform ist das Anschlussstück so ausgebildet, dass es an den Zulaufstutzen und/oder an den Ablaufstutzen montierbar ist. Der Zulaufstutzen und der Ablaufstutzen stellen gute und stabile Befestigungsmöglichkeiten für das Anschlussstück zur Verfügung. Insbesondere kann so auf das Herstellen einer zusätzlichen Befestigungsmöglichkeit für das Anschlussstück verzichtet werden, wodurch die Herstellungskosten für den Kühlkörper gering gehalten werden können.

In einer Ausführungsform liegt wenigstens ein Bereich des Kühlblechs an dem Einspritzventil an und das Kühlvolumen ist durch wenigstens einen O-Ring, der zwischen dem Einspritzventil und dem Kühlblech angeordnet ist, fluiddicht abgedichtet. Auf diese Weise wird eine konstruktiv einfache aber zuverlässige Abdichtung des Kühlvolumens geschaffen.

In einer alternativen Ausführungsform weist das Einspritzventil wenigstens zwei koaxial zueinander angeordnete Metallhülsen auf, die durch Schweißen, insbesondere Laserschweißen, fluiddicht miteinander verbunden sind, um eine fluiddichte Verbindung zwischen den beiden Metallhülsen zu schaffen. Auf diese Weise kann ein fluiddicht abgedichtetes Kühlvolumen bereit gestellt werden, ohne einen O-Ring zu verwenden.

### Figurenbeschreibung

Die Erfindung wird im Folgenden unter Bezugnahme auf die beigefügten Figuren näher erläutert.
Figur 1 zeigt eine Schnittansicht eines ersten Ausführungsbeispiels eines erfindungsgemäßen Kühlkörpers mit einem Einspritzventil.
Figur 2 zeigt einen vergrößerten Ausschnitt aus Figur 1, der den Bereich um die Ventilspitze des Einspritzventils zeigt.
Die Figuren 3a und 3b veranschaulichen die Befestigung des Anschlussstücks an den Zu- und Ablaufstutzen des Kühlkörpers; und
Figur 4 zeigt eine Schnittansicht eines zweiten Ausführungsbeispiels eines erfindungsgemäßen Kühlkörpers mit einem Einspritzventil.

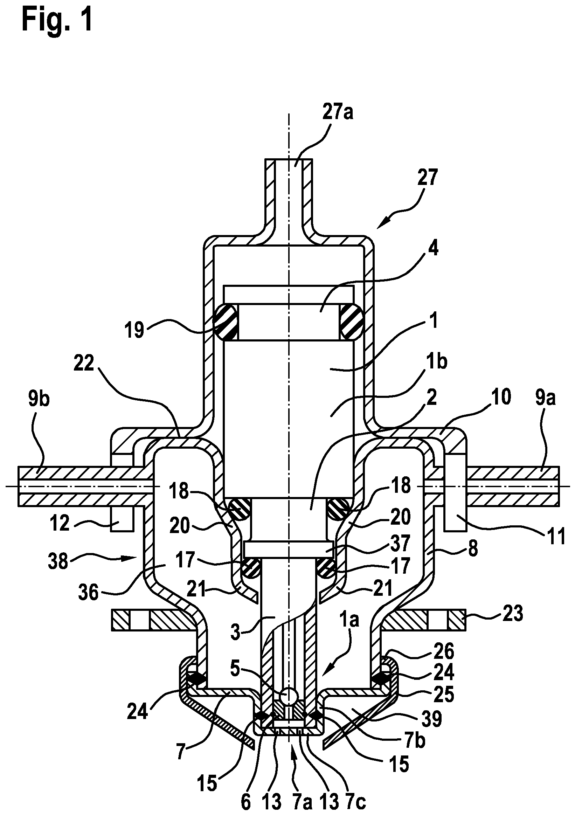

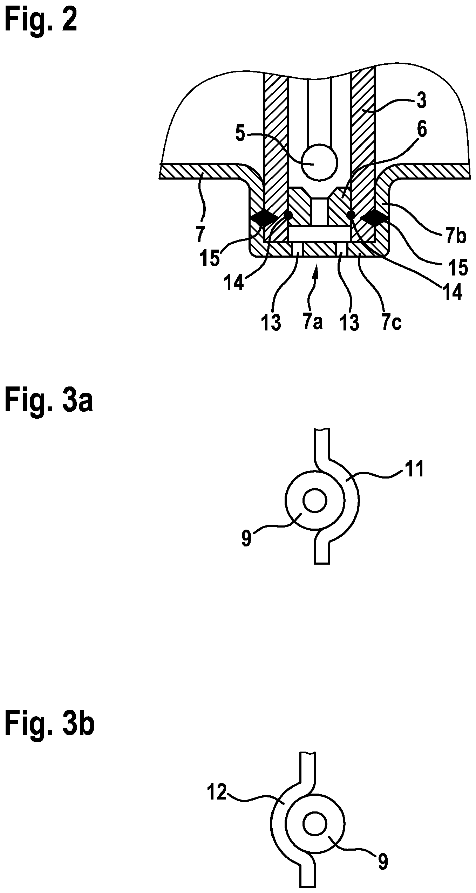

Figur 1 zeigt eine Schnittansicht eines ersten Ausführungsbeispiels eines erfindungsgemäßen Kühlkörpers 38 mit einem Einspritzventil 1 und Figur 2 zeigt einen vergrößerten Ausschnitt aus Figur 1, der den Bereich um die Spitze 1a des Einspritzventils 1 zeigt.

Das in den Figuren 1 und 2 gezeigte Einspritzventil 1 besitzt eine einspritzseitige Hülse 3, in die mittels einer umlaufenden (Laser-)Schweißung 14 ein Ventilsitz 6 eingeschweißt ist. Der Ventilsitz 6 ist durch ein beweglich in der Hülse 3 des Einspritzventils 1 gelagertes Ventil-Verschlusselement 5 wahlweise verschließbar und freigebbar, um kontrolliert Fluid aus dem Einspritzventil 1 in einen in der Figur 1 nicht gezeigten Abgasstrang einspritzen zu können.

Ein erfindungsgemäßer Kühlkörper 38 umfasst ein U-förmig gebogenes Kühlblech 8, an das, z.B. durch eine umlaufende (Laser-)Schweißung 24, eine Stirnplatte 7 fluiddicht angeschlossen ist. Die Stirnplatte 7 ist im Bereich um die Spitze 1a des Einspritzventils 1 napfförmig so ausgebildet, dass die Spitze 1a des Einspritzventils 1 im Wesentlichen formschlüssig in den napfförmig ausgebildeten Bereich 7a einführbar ist. In der Stirnseite 7c des napfförmig ausgebildeten Bereichs 7a sind ein oder mehrere Spritzlöcher 13 ausgebildet, die es ermöglichen, Fluid aus dem Einspritzventil 1 durch die Spritzlöcher 13 in einen, in den Figuren nicht gezeigten, Abgasstrang einzuspritzen.

Der Kühlkörper 38, der das um das Einspritzventil 1 umlaufende Kühlblech 8 und die Stirnplatte 7 umfasst, ist, z.B. über eine umlaufende (Laser-)Schweißung 15, mit der Hülse 3 des Einspritzventils 1 verbunden. Auf diese Weise entsteht ein geschlossenes, ringförmig um die Hülse 3 des Einspritzventils 1 umlaufendes Kühlvolumen 36, das von der Stirnplatte 7, die den Boden des Kühlvolumens 36 bildet, sowie der Hülse 3 des Einspritzventils 1 und dem Kühlblech 8, welche gemeinsam die innere bzw. äußere und obere Seitenwand des Kühlvolumens 36 bilden, begrenzt wird.

Die Verbindungsstellen 24 und 15 zwischen der Stirnplatte 7 und dem Kühlblech 8 bzw. der Stirnplatte 7 und der Hülse 3 des Einspritzventils 1 werden beim Betrieb des Verbrennungsmotors durch die heißen Abgase im Abgasstrang auf hohe Temperaturen erhitzt. Die vorgeschlagene stoffschlüssige Verbindung, z.B. durch (Laser-)Schweißen, ist daher einer Verbindung durch Kleben oder einer O-Ringabdichtung vorzuziehen, da sie eine deutlich höhere Haltbarkeit und Zuverlässigkeit aufweist.

Der Kühlkörper 38 ist mit einem Einlassstutzen 9a und einem Auslassstutzen 9b, ausgebildet, die vorgesehen sind, um ein fluides Kühlmittel in das Kühlvolumen 36 einzubringen und erhitztes Kühlmittel wieder aus dem Kühlvolumen 36 abzuführen. Durch das Kühlmittel kann die Temperatur des Einspritzventils 1 im Betrieb trotz hoher Abgastemperaturen des Verbrennungsmotors unter einem vorgegebenen Grenzwert gehalten werden, um ein Überhitzen des Einspritzventils 1 zu verhindern und so die Funktionsfähigkeit des Einspritzventils 1 dauerhaft zu erhalten.

Die Abdichtung zwischen dem Kühlblech 8 und dem Einspritzventil 1 erfolgt im ersten, in der Figur 1 gezeigten Ausführungsbeispiel durch einen ersten O-Ring 17, der sich im gekühlten Bereich befindet, so dass er nicht den hohen Abgastemperaturen ausgesetzt ist, und der einen an der Hülse 3 des Einspritzventils 1 anliegenden Bereich 21 des Kühlblechs 8 radial gegen die Hülse 3 abdichtet. Durch die gebogene Formgebung des an der Hülse 3 anliegenden Bereichs 21 des Kühlblechs 8 ist gewährleistet, dass der erste O-Ring 17 zugleich an einem am oberen Ende der Hülse 3 ausgebildeten Bund 37 anliegt und das Kühlvolumen 36 so auch in axialer Richtung fluiddicht abdichtet.

Um zu verhindern, dass Wasser von außen in das Kühlvolumen 36 eindringt, kann zusätzlich ein zweiter O-Ring 18 vorgesehen sein, der die Kontaktstelle zwischen einer Metallhülse 2 des Einspritzventils 1 und dem Kühlblech 8 in radialer Richtung abdichtet. Durch die Formgebung des Kühlblechs 8 im Bereich 20 des zweiten O-Ringes 18 ist zugleich gewährleistet, dass ein hinterer Bereich 1 b des Einspritzventils 1, der insbesondere aus Kunststoff ausgebildet sein kann, in axialer Richtung gegenüber der Metallhülse 2 abgedichtet ist. Die Montage der O-Ringe 17 und 18 erfolgt, bevor die Stirnplatte 7, z.B. durch (Laser-)Schweißen, fest mit der Spitze 1a des Einspritzventil 1 verbunden wird.

Der Kühlkörper 38 weist auch einen Flansch 23 auf, über den er an dem, in der Figur 1 nicht gezeigten, Abgasstrang befestigt wird.

Das einzuspritzende Fluid bzw. Reduktionsmittel wird dem Einspritzventil 1 über ein Anschlussstück 27, das einen Fluidzulauf 27a aufweist, zugeführt. Um das Einspritzventil 1 vor der Hitze der durch den Abgasstrang strömenden heißen Abgase zu schützen, ist das Anschlussstück 27 bis auf einen, in der Figur 1 nicht gezeigten Abgang für einen elektrischen Stecker, der zur Ansteuerung des Einspritzventils 1 vorgesehen ist, weitgehend abgeschlossen. Das Anschlussstück 27 ist beispielsweise als Blechteil ausgebildet. Über zwei Blechbügel 11 und 12 wird es durch Einklipsen an den Zu- und Ablaufstutzen 9a, 9b des Kühlkörpers 38 angebracht, wie in den Figuren 3a und 3b veranschaulicht.

Das Anschlussstück 27 ist durch einen dritten O-Ring 19, der vorzugsweise in einer um einen oberen Abschnitt des Einspritzventils 1 umlaufenden Nut 4 angeordnet ist, gegenüber dem Einspritzventil 1 abgedichtet, so dass ein unkontrolliertes Austreten von Fluid an der Kontaktstelle zwischen dem Einspritzventil 1 und dem Anschlussstück 27 zuverlässig verhindert wird.

Um Wärme aus dem Anschlussstück 27, insbesondere im Bereich des dritten O-Ringes 19, abzuführen, ist zwischen dem Kühlkörper 38 und Anschlussstück 27 eine Kontaktfläche 22 vorgesehen.

Damit das im unteren Bereich des Kühlvolumens 36 an den heißen Abgasstrang unmittelbar angrenzende Kühlmittel im Betrieb nicht zum Sieden kommt, ist ein Hitzeschild 25 in Form einer dünnen Metallscheibe vorgesehen. Das Hitzeschild 25, das über einen Hinterschnitt 26 mit dem Kühlkörper 38 verbunden ist, umschließt zusammen mit der Stirnplatte 7 einen nahezu abgeschlossenen Luftraum 39 um den napfförmigen Bereich 7a. Der Luftraum 39 wird durch das Kühlmittel gekühlt und verhindert so, dass das Kühlmittel im Bodenbereich des Kühlvolumens 36 auf oder über seine Siedetemperatur erhitzt wird.

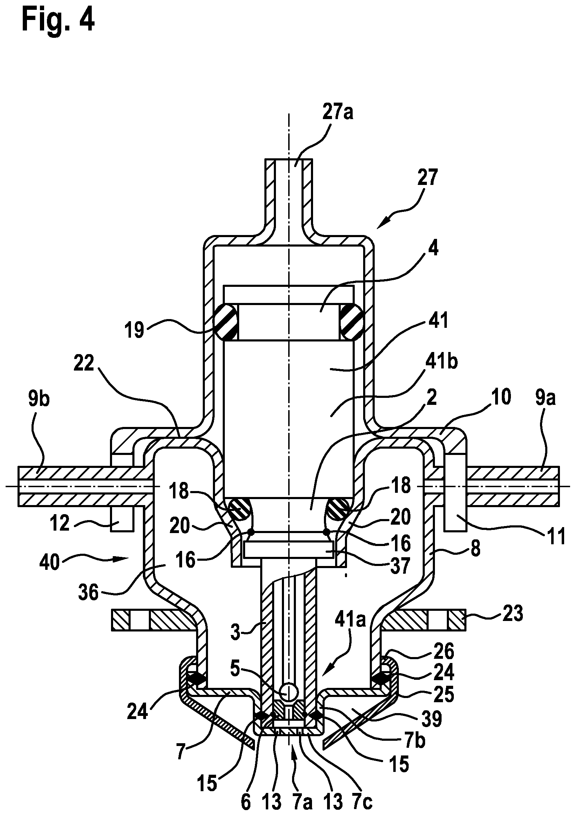

Figur 4 zeigt eines Schnittansicht eines zweiten Ausführungsbeispiels eines erfindungsgemäßen Kühlkörpers 40 mit einem Einspritzventil 1.

Der Kühlkörper 40 gemäß dem in der Figur 2 gezeigten zweiten Ausführungsbeispiels entspricht im Wesentlichen dem in der Figur 1 gezeigten ersten Ausführungsbeispiel, und diejenigen Komponenten, die mit denen des in der Figur 1 gezeigten ersten Ausführungsbeispiels identisch sind, sind mit den gleichen Bezugszeichen versehen und werden nicht erneut im Detail beschrieben.

Im zweiten Ausführungsbeispiel ist ein im Vergleich zum ersten Ausführungsbeispiel alternatives Abdichtungskonzept verwirklicht: Das Einspritzventil 41 weist im zweiten Ausführungsbeispiel zwei Metallhülsen 2, 3 auf, die durch eine zusätzliche, in Umfangsrichtung der Metallhülsen 2, 3 verlaufende Laserschweißung 16 fluiddicht miteinander verbunden sind. Der im ersten Ausführungsbeispiel vorgesehene erste O-Ring 17, der trotz der vorgesehenen Kühlung relativ hohen Temperaturen ausgesetzt und daher verschleißanfällig ist, kann daher entfallen.

## Patentansprüche

1. Kühlkörper (38; 40) für ein Einspritzventil (1; 41), das insbesondere zum Einspritzen eines flüssigen Reduktionsmittels in einen Abgasstrang eines Verbrennungsmotors vorgesehen ist, mit
einem hohlen Bereich, der zur Aufnahme wenigstens eines Abschnitts (1a, 1b; 41 a, 41 b) des Einspritzventils (1; 41) vorgesehen ist,
einem um den hohlen Bereich umlaufenden Kühlblech (8), und
einer an einer Stirnseite des Einspritzventils (1; 41) angeordneten Stirnplatte (7);
**dadurch gekennzeichnet, dass**
die Stirnplatte (7) wenigstens einen napfförmig mit einer Stirnwand (7c) und wenigstens einer Seitenwand (7b) ausgeformten Bereich (7a) aufweist, der zur Aufnahme eines einspritzseitigen Abschnitts (1 a; 41 a) des Einspritzventils (1; 41) so ausgebildet ist, dass die Spitze (1a) des Einspritzventils im Wesentlichen formschlüssig in den napfförmig ausgebildeten Bereich einführbar ist;
die Stirnwand (7c) wenigstens eine Einspritzöffnung (13) aufweist, die es ermöglicht, Fluid aus dem Einspritzventil (1; 41) durch die Stirnplatte (7) zu spritzen, und
das Kühlblech (8) und die Stirnplatte (7) fluiddicht miteinander verbunden sind, so dass in einem Zustand, in dem ein Abschnitt (1a, 1b; 41 a, 41 b) eines Einspritzventils (1; 41) bestimmungsgemäß in dem hohlen Bereich angeordnet ist, durch die Stirnplatte (7), das Kühlblech (8) und das Einspritzventil (1; 41) ein um den Abschnitt (1 a, 1 b; 41 a, 41 b) des Einspritzventils (1; 41) umlaufendes Kühlvolumen (36) begrenzt wird.

2. Kühlkörper (38; 40) nach Anspruch 1, wobei das Kühlblech (8) und die Stirnplatte (7) durch Schweißen, insbesondere Laserschweißen, fluiddicht miteinander verbunden sind.

3. Kühlkörper (38; 40) nach Anspruch 1 oder 2, der zusätzlich ein Anschlussstück (27) aufweist, das zur Aufnahme eines dem einspritzseitigen Abschnitt (1a; 41a) gegenüberliegenden hinteren Endbereichs (1b; 41b) des Einspritzventils (1; 41) ausgebildet ist.

4. Kühlkörper (38; 40) nach Anspruch 3, wobei das Anschlussstück (27) einen Zulauf (27a) aufweist, der ausgebildet ist, um dem Einspritzventil (1; 41) einzuspritzendes Fluid zuzuführen.

5. Kühlkörper (38; 40) nach einem der vorangehenden Ansprüche, wobei an dem Kühlblech (8) wenigstens ein Zulaufstutzen (9a) und/oder ein Ablaufstutzen (9b) ausgebildet ist, der es ermöglicht, Kühlfluid in das bzw. aus dem Kühlvolumen (36) zu führen.

6. Kühlkörper (38; 40) nach Anspruch 5, soweit er auf Anspruch 3 oder 4 zurückbezogen ist, wobei das Anschlussstück (27) so ausgebildet ist, dass es an dem Zulaufstutzen (9a) und/oder Ablaufstutzen (9b) montierbar ist.

7. Einspritzvorrichtung mit einem Kühlkörper (38; 40) nach einem der vorangehenden Ansprüche und mit einem Einspritzventil (1; 41), das insbesondere zum Einspritzen eines fluiden Reduktionsmittels in einen Abgasstrang eines Verbrennungsmotors ausgebildet ist, wobei ein einspritzseitiger Abschnitt (1 a; 41 a) des Einspritzventils (1; 41) in dem napfförmigen Bereich (7a) der Stirnplatte (7) angeordnet ist.

8. Einspritzvorrichtung nach Anspruch 7, wobei der einspritzseitige Abschnitt (1 a; 41 a) des Einspritzventils (1; 41) durch Schweißen, insbesondere Laserschweißen, fluiddicht mit dem napfförmigen Bereich (7a) verbunden ist.

9. Einspritzvorrichtung nach Anspruch 7 oder 8, wobei wenigstens ein Bereich (21) des Kühlblechs (8) an dem Einspritzventil (1) anliegt und das Kühlvolumen (36) durch wenigstens einen O-Ring (17), der zwischen dem Einspritzventil (1) und dem Bereich (21) des Kühlblechs (8) angeordnet ist, fluiddicht abgedichtet ist.

10. Einspritzvorrichtung nach Anspruch 7 oder 8, wobei das Einspritzventil (41) wenigstens zwei koaxial zueinander angeordnete Metallhülsen (2, 3) aufweist, die durch Schweißen, insbesondere Laserschweißen, fluiddicht miteinander verbunden sind.

## Claims

1. Cooling element (38; 40) for an injection valve (1; 41) which is provided, in particular, for injecting a liquid reducing agent into an exhaust gas section of an internal combustion engine, having
a hollow region which is provided for receiving at least one section (1a, 1b; 41a, 41b) of the injection valve (1; 41),
a cooling plate (8) which runs around the hollow region, and
an end plate (7) which is arranged on an end side of the injection valve (1; 41);
**characterized in that**
the end plate (7) has at least one region (7a) which is shaped in a bowl-like manner with an end wall (7c) and at least one side wall (7b) and is configured for receiving an injection-side section (1a; 41a) of the injection valve (1; 41) such that the tip (1a) of the injection valve can be inserted in an essentially form-fitting manner into the region shaped in a bowl-like manner;
the end wall (7c) has at least one injection opening (13) which makes it possible to spray fluid out of the injection valve (1; 41) through the end plate (7), and
the cooling plate (8) and the end plate (7) are connected to one another in a fluid-tight manner, with the result that, in a state in which a section (1a, 1b; 41a, 41b) of an injection valve (1; 41) is arranged as intended in the hollow region, a cooling volume (36) which runs around the section (1a, 1b; 41a, 41b) of the injection valve (1; 41) is delimited by the end plate (7), the cooling plate (8) and the injection valve (1; 41).

2. Cooling element (38; 40) according to Claim 1, the cooling plate (8) and the end plate (7) being connected to one another in a fluid-tight manner by way of welding, in particular laser welding.

3. Cooling element (38; 40) according to Claim 1 or 2, which additionally has a connector piece (27) which is configured for receiving a rear end region (1b; 41b) of the injection valve (1; 41), which rear end region (1b; 41b) lies opposite the injection-side section (1a; 41a).

4. Cooling element (38; 40) according to Claim 3, the connector piece (27) having a feed line (27a) which is configured to feed fluid to be injected to the injection valve (1; 41).

5. Cooling element (38; 40) according to one of the preceding claims, at least one feed stub (9a) and/or one outlet stub (9b) being configured on the cooling plate (8), which feed stub (9a) and/or outlet stub (9b) makes it possible to conduct cooling fluid into and out of the cooling volume (36), respectively.

6. Cooling element (38; 40) according to Claim 5, if it refers back to Claim 3 or 4, the connector piece (27) being configured in such a way that it can be mounted on the feed stub (9a) and/or outlet stub (9b).

7. Injection apparatus having a cooling element (38; 40) according to one of the preceding claims and having an injection valve (1; 41) which is configured, in particular, for injecting a fluid reducing agent into an exhaust gas section of an internal combustion engine, an injection-side section (1a; 41a) of the injection valve (1; 41) being arranged in the bowl-like region (7a) of the end plate (7).

8. Injection apparatus according to Claim 7, the injection-side section (1a; 41a) of the injection valve (1; 41) being connected to the bowl-like region (7a) in a fluid-tight manner by way of welding, in particular laser welding.

9. Injection apparatus according to Claim 7 or 8, at least one region (21) of the cooling plate (8) bearing against the injection valve (1), and the cooling volume (36) being sealed in a fluid-tight manner by way of at least one O-ring (17) which is arranged between the injection valve (1) and the region (21) of the cooling plate (8).

10. Injection apparatus according to Claim 7 or 8, the injection valve (41) having at least two metal sleeves (2, 3) which are arranged coaxially with respect to one another and are connected to one another in a fluid-tight manner by way of welding, in particular laser welding.

## Revendications

1. Dissipateur thermique (38 ; 40) pour une soupape d'injection (1 ; 41) qui est prévu notamment pour injecter un agent réducteur fluide dans une ligne d'échappement d'un moteur à combustion interne, comprenant
une région creuse qui est prévue pour recevoir au moins une portion (1a, 1b ; 41a, 41b) de la soupape d'injection (1 ; 41),
une tôle de refroidissement (8) entourant la région creuse, et
une plaque frontale (7) disposée au niveau d'un côté frontal de la soupape d'injection (1 ; 41) ;
**caractérisé en ce que**
la plaque frontale (7) présente au moins une région (7a) en forme de cuvette formée avec une paroi frontale (7c) et au moins une paroi latérale (7b), qui est réalisée pour recevoir une portion côté injection (1a ; 41a) de la soupape d'injection (1 ; 41) de telle sorte que la pointe (1a) de la soupape d'injection puisse être introduite essentiellement par engagement par correspondance de formes dans la région réalisée en forme de cuvette ;
la paroi frontale (7c) présente au moins une ouverture d'injection (13) qui permet d'injecter du fluide depuis la soupape d'injection (1 ; 41) à travers la plaque frontale (7), et
la tôle de refroidissement (8) et la plaque frontale (7) sont connectées l'une à l'autre de manière étanche aux fluides de telle sorte que dans un état dans lequel une portion (1a, 1b ; 41a, 41b) d'une soupape d'injection (1 ; 41) est disposée de manière conforme dans la région creuse, un volume de refroidissement (36) entourant la portion (1a, 1b ; 41a, 41b) de la soupape d'injection (1 ; 41) soit limité par la plaque frontale (7), la tôle de refroidissement (8) et la soupape d'injection (1 ; 41).

2. Dissipateur thermique (38 ; 40) selon la revendication 1, dans lequel la tôle de refroidissement (8) et la plaque frontale (7) sont connectées l'une à l'autre de manière étanche aux fluides par soudage, en particulier par soudage laser.

3. Dissipateur thermique (38 ; 40) selon la revendication 1 ou 2, qui présente en outre une pièce de raccordement (27) qui est réalisée pour recevoir une région d'extrémité arrière (1b ; 41b) de la soupape d'injection (1 ; 41) opposée à la portion côté injection (1a ; 41a).

4. Dissipateur thermique (38 ; 40) selon la revendication 3, dans lequel la pièce de raccordement (27) présente une alimentation (27a) qui est réalisée pour acheminer du fluide à injecter à la soupape d'injection (1 ; 41).

5. Dissipateur thermique (38 ; 40) selon l'une quelconque des revendications précédentes, dans lequel au moins une tubulure d'alimentation (9a) et/ou une tubulure d'écoulement (9b) sont réalisées au niveau de la tôle de refroidissement (8), lesquelles permettent de conduire du fluide de refroidissement dans ou depuis le volume de refroidissement (36).

6. Dissipateur thermique (38 ; 40) selon la revendication 5, dans la mesure où elle se rapporte à la revendication 3 ou 4, dans lequel la pièce de raccordement (27) est réalisée de telle sorte qu'elle puisse être montée sur la tubulure d'alimentation (9a) et/ou la tubulure d'écoulement (9b).

7. Dispositif d'injection comprenant un dissipateur thermique (38 ; 40) selon l'une quelconque des revendications précédentes et comprenant une soupape d'injection (1 ; 41) qui est réalisée notamment pour l'injection d'un agent réducteur fluide dans une ligne d'échappement d'un moteur à combustion interne, une portion côté injection (la ; 41a) de la soupape d'injection (1 ; 41) étant disposée dans la région en forme de cuvette (7a) de la plaque frontale (7).

8. Dispositif d'injection selon la revendication 7, dans lequel la portion côté injection (la ; 41a) de la soupape d'injection (1 ; 41) est connectée de manière étanche aux fluides à la région en forme de cuvette (7a) par soudage, en particulier par soudage laser.

9. Dispositif d'injection selon la revendication 7 ou 8, dans lequel au moins une région (21) de la tôle de refroidissement (8) s'applique contre la soupape d'injection (1) et le volume de refroidissement (36) est étanchéifié de manière étanche aux fluides par au moins un joint torique (17) qui est disposé entre la soupape d'injection (1) et la région (21) de la tôle de refroidissement (8).

10. Dispositif d'injection selon la revendication 7 ou 8, dans lequel la soupape d'injection (41) présente au moins deux douilles métalliques (2, 3) disposées coaxialement l'une à l'autre qui sont connectées l'une à l'autre de manière étanche aux fluides par soudage, en particulier par soudage laser.
